# EUROPEAN PATENT APPLICATION

(11) **EP 1 333 417 A2**
(43) Date of publication of application: **06.08.2003**
(21) Application number: 03250425.0
(22) Date of filing: 23.01.2003
(51) Int. Cl.: G09F 21/04, G09F 27/00

(54) **Advertisement distribution method, advertisement distribution apparatus and advertisement displaying vehicle**

(30) Priority: 31.01.2002 JP 2002023829
(71) Applicant: NISSAN MOTOR COMPANY, LIMITED, Yokohama-shi, Kanagawa 221-0023 (JP)
(72) Inventor: Fujimoto, Hiroshi, Zama-shi, Kanagawa (JP); Kawamoto, Yuuichirou, Sagamihara-shi, Kanagawa (JP)
(74) Representative: Godwin, Edgar James

(57) **Abstract**

Advertisement data information is transmitted from a plurality of roadside servers (3a ∼ 3x) having stored therein advertisement data information prepared for advertising purposes via roadside antennas (1a ∼ 1x) to advertisement displaying vehicles (10) present within the communication ranges of the roadside antennas (1a ∼ 1x). An advertisement displaying vehicle (10) having received such advertisement data information displays the received advertisement data information to be viewed by people outside of the vehicle (10).

## Description

The present invention relates to a method for distributing advertisements to a vehicle having a display device on which the advertisements are displayed by utilizing a road-to-vehicle communication system, an advertisement distribution apparatus, and a vehicle on which advertisements are displayed.

There are systems in the related art in which advertisements are presented to consumers by using vehicles. In such a system, an advertiser lends out a vehicle having an advertisement for a company or a product printed on the surface of the vehicle body or having an advertisement mounted on the vehicle to a party agreeing to drive the vehicle in a specified area or along a specified route for a specific length of time or longer. The party who borrows the vehicle is paid an advertising (publicity) fee or the like in exchange for the advertising service.

However, it is not possible to accurately ascertain exactly how long an advertisement displaying vehicle has driven within a specified area where the advertisement is expected to achieve positive results in the advertising system achieved by using a vehicle as described above in the related art. In addition, since the advertisement is either printed on the surface of the vehicle body or mounted on the vehicle, the contents of the advertisement cannot be changed easily

It would be desirable to provide an advertisement distribution method, an advertisement distribution apparatus, and an advertisement displaying vehicle, which allow the contents of the advertisement to be changed with ease.

An advertisement distribution method according to the present invention comprises transmitting via roadside antennas advertisement data information from a plurality of roadside servers having stored therein advertisement data information to advertisement displaying vehicles present within communication ranges of the roadside antennas.

An advertisement distribution apparatus according to the present invention comprises a plurality of storage means, each provided in a predetermined area, for storing therein advertisement data information and advertisement transmission means, each provided in conjunction with one of the plurality of storage means, for transmitting the advertisement data information stored in the storage means to advertisement displaying vehicles.

An advertisement displaying vehicle according to the present invention comprises a transmission means for transmitting information related to the vehicle to a roadside server via a roadside antenna, a reception means for receiving advertisement data information transmitted from the roadside server via the roadside antenna and a display means for displaying the advertisement data information received at the reception means.

### BRIEF DESCRIPTION OF THE DRAWINGS

FIG. 1 shows the system configuration for road-to-vehicle communication adopted in an embodiment of an advertisement distribution method according to the present invention;
FIG. 2 shows the overall structure of the advertisement displaying vehicle achieved in an embodiment of the present invention;
FIG. 3 shows the structure of the on-vehicle system achieved in an embodiment;
FIG. 4 shows the structure of the registered data with regard to advertisers, stored in the center server;
FIG. 5 presents an example of contract information which is transmitted from the on-vehicle device to a roadside antenna;
FIG. 6 presents a flowchart of the procedure of the processing executed at the on-vehicle device and the local server in a first embodiment;
FIG. 7 presents an example of contract information which is transmitted from the on-vehicle device to a roadside antenna in a second embodiment;
FIG. 8 presents an example of the advertisement data information stored in the local server in the second embodiment;
FIG. 9 presents a flowchart of the procedure of the processing executed at the on-vehicle device and the local server in the second embodiment; and
FIG. 10 presents a flowchart of the procedure of the processing executed at the on-vehicle device and the local server in a third embodiment.

### DETAILED DESCRIPTION OF THE PREFERRED EMBODIMENTS

### First Embodiment

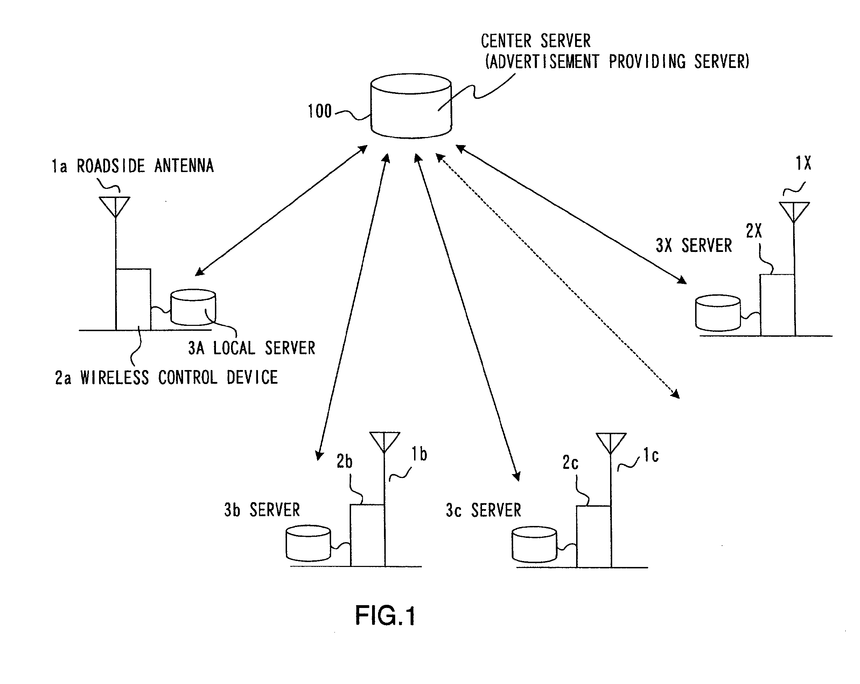

The research into potential industrial applications of road-to-vehicle communication systems is conducted with increasing fervor today as the ITS (Intelligent Transport Systems) technology continues to make further progress. FIG. 1 shows the system configuration for road-to-vehicle communication adopted in an embodiment of an advertisement distribution method according to the present invention. Through this road-to-vehicle communication system, various types of information are exchanged between a plurality of roadside antennas (antennas 1a ∼ 1x) installed in advance at specific positions and a center server 100. The center server 100 and the plurality of antennas are connected through a high-speed network.

Wireless control devices 2a ∼ 2x and local servers (servers 3a ∼ 3x) are respectively provided at locations where the antennas 1a ∼ 1x are installed, and they are collectively referred to as a roadside system. As detailed later, data that are regularly transmitted from the center server 100 are stored in the local servers 3a ∼ 3x. The data, such as advertisement information, stored at the local servers 3a ∼ 3x are distributed to vehicles equipped with on-vehicle devices via the roadside antennas, in response to commands issued by the wireless control devices 2a ∼ 2x.

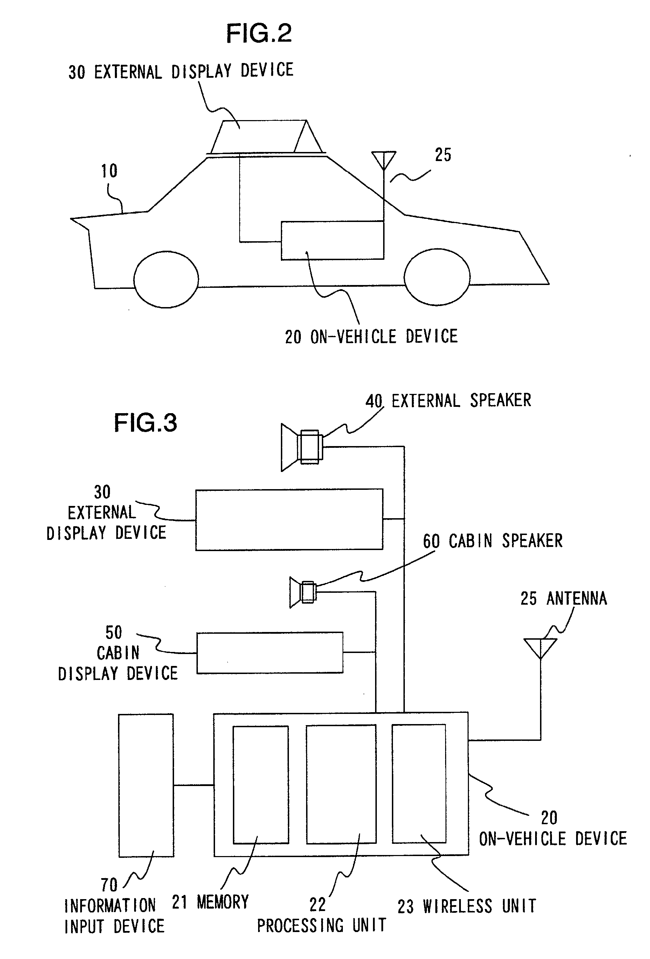

FIG. 2 shows the overall structure adopted in an embodiment of the advertisement displaying vehicle according to the present invention. An advertisement displaying vehicle 10 includes an on-vehicle device 20 which is utilized for road-to-vehicle communication, a communication antenna 25, an external display device 30 used to display advertisement information received through road to vehicle communication, and the like. While the external display device 30 is installed on the roof of the vehicle 10 as shown in FIG. 2, it may instead be achieved by installing an electronic display board at the rear window of the vehicle 10 or by installing an electronic display board at a side of the vehicle 10. Namely, it should be installed at a position where the contents of the advertisement can be viewed by people outside the vehicle.

FIG. 3 shows the structure of an on-vehicle system, which includes the on-vehicle device 20 and the external display device 30 described above, achieved in an embodiment. The on-vehicle device 20 is provided with a memory 21, a processing unit 22, and a wireless unit 23. In the memory 21, information related to advertisement contracts, which is transmitted (uplinked) during a road-to-vehicle communication between the vehicle 10 and the roadside antennas 1a ∼ 1x, is stored. In addition to the external display device 30 and the antenna 25 mentioned above, an external speaker 40, a cabin display device 50, a cabin speaker 60, and an information input device 70 are connected to the on-vehicle device 20.

Through the information input device 70, which may be, for instance, a key-pad or a keyboard, the contract information to be detailed later is input. Alternatively, an IC card reader (writer) that reads the contract information written in an IC card into the memory 21 may be provided as the information input device 70. At the cabin display device 50, information input through the information input device 70 or the advertisement displayed at the external display device 30 can be displayed. If the vehicle is a passenger transportation service vehicle such as a taxi, advertisements can be presented to the passengers inside the vehicle by utilizing the cabin display device 50 and the cabin speaker 60 as well.

The processing unit 22 in the on-vehicle device 20 controls the display units 30 and 50 and the speakers 40 and 60, and also generates information to be transmitted to the roadside antennas 1a ∼ 1x based upon the data stored in the memory 21. The information thus generated is transmitted to the roadside antennas 1a ∼ 1x near the vehicle 10 via the wireless unit 23 and the antenna 25.

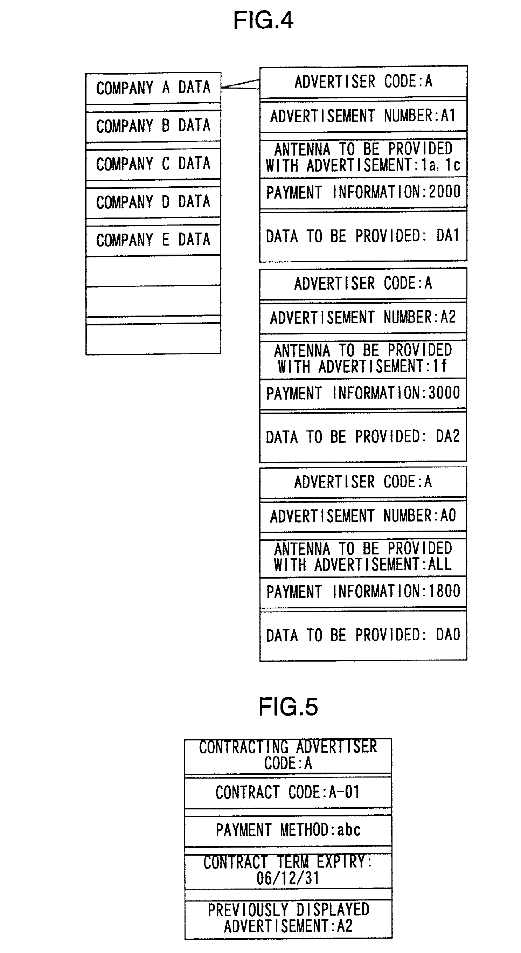

FIG. 4 shows the structure of the registered data related to advertisers, which are stored in the center server 100. The registered data contain data on a plurality of advertisers, e.g., data on a company A, data on a company B, etc. An advertiser is able to register a plurality of sets of advertisement data each in correspondence to a specific area where the advertisement is to be circulated. For instance, different advertisement contents may be offered in a residential area and in a business district. In FIG. 4, the registration of company A among the plurality of advertisers having their advertisement data registered in the center server 100 are shown in further detail.

The registered data stored in the center server 100 include an advertiser code identifying a registered advertiser ("A" in FIG. 4), advertisement numbers used to ascertain the types and contents of registered advertisements and the dates of registration ("A1", "A2", and "A0" in FIG. 4), information indicating the roadside antenna points at which the advertisements are to be provided ("1a, 1c", and the like in FIG. 4), information regarding the payments to be made for the service rendered by displaying the advertisements on the external display device 30 of the vehicle 10 ("2000" and the like in FIG. 4), and advertisement data information to be downloaded to the on-vehicle device 20 ("DA1" and the like in FIG. 4).

Among the various types of information included in the registered data described above, information on the fee (hereafter referred to as payment information) is set based upon a contract reached between the advertiser and the advertisement distributor who actually distributes the advertisements by driving the advertisement displaying vehicle. If monetary fees are to be paid to the advertisement distributor for advertising services under the contract, the advertising fees are registered as the payment information. If, on the other hand, the advertisement distributor is to be rewarded with product discount points or points other than discount points, such points are registered as the payment information.

When a point system is adopted, the points awarded to the advertisement distributor may be recorded into an IC card issued by the advertiser or an affiliated company. Namely, when an advertisement has been displayed at the external display device 30 of the vehicle 10, the points due to be awarded to the advertisement distributor are written into the IC card by using an IC card writer (the information input device 70) connected to the on-vehicle device 20. If the vehicle is not equipped with an IC card writer, information indicating that the advertisement has been displayed may be recorded into the center server 100 so that the points can be written into the IC card at a store or a service station specified by an the advertiser where an IC card writer is installed. By adopting such a system, it becomes possible to reward/collect points with ease by using an IC card without having to exchange cash. It is to be noted that an IC card in which points are recorded has stored therein a contract code to be detailed later to enable advertiser identification.

The center server 100 regularly transmits advertisement data information to the roadside antennas 1a ∼ 1x based upon the roadside antenna information included in the registered data. For instance, the advertisement data information DA1 assigned with the advertisement number A1 in FIG. 4 is transmitted to the roadside antennas 1a and 1c. The advertisement data information thus transmitted to the roadside antennas 1a ∼ 1x is stored into the local servers 3a ∼ 3x installed in conjunction with the roadside antennas 1a ∼ 1x respectively. The latest advertisement data information transmitted from the center server 100 is written over the advertisement data information stored at the local servers 3a ∼ 3x and, thus, the local servers 3a ∼ 3x hold the most recent information at all times.

The registered data assigned with the advertisement number "A0" among the data registered by the company A shown in FIG. 4 are data to be transmitted to all the roadside antennas. If the advertiser does not transmit any advertisement data information by indicating specific roadside antennas, registered data set in advance to be transmitted to all the roadside antennas are transmitted. Accordingly advertisement data information assigned with Number 0 ("DA0" in FIG. 4) is transmitted from the center server 100 to all the roadside antennas.

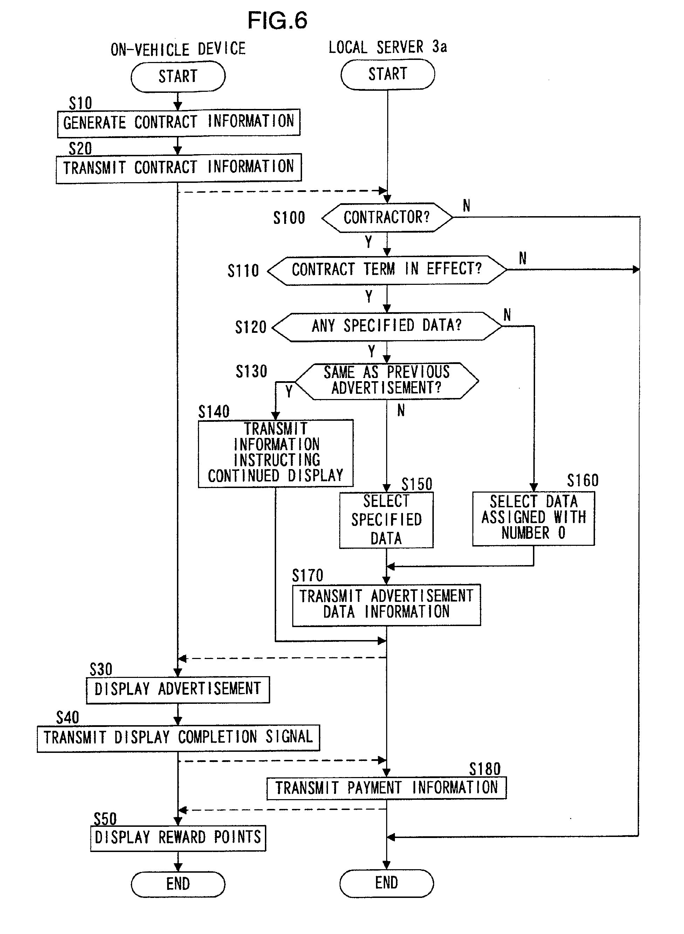

FIG. 5 presents an example of the contract information transmitted from the on-vehicle device 20 to the roadside antennas 1a ∼ 1x during a road-to-vehicle communication carried out between the on-vehicle device 20 and the roadside antennas 1a ∼ 1x via the antenna 25. This contract information contains the contracting advertiser code (A) for identifying the advertiser with the contract, the contractor code (A-01) which allows the advertiser to identify the contractor, payment information (abc) that indicates how the payment for advertisement display is to be made, contract term information (06/12/31) indicating the expiry data on which the advertisement display contract expires,and the advertisement number (A2) corresponding to the advertisement most recently displayed at the external display device 30.

The contract information transmitted from the on-vehicle device 20 to request advertisement data information is received at the roadside antennas 1a ∼ 1x and then transferred to the local servers 3a ∼ 3x. Based upon the contract information having been transmitted thereto, the local servers 3a ∼ 3x make a verification to ascertain whether or not there is any advertisement data information from the advertiser indicated in the request from the on-vehicle device 20 and as to whether or not the contract term has expired. If there is advertisement data information to be transmitted to the on-vehicle device 20, the advertisement data information is transmitted to the on-vehicle device 20. The on-vehicle device 20, in turn, displays the advertisement data information at the external display device 30.

FIG. 6 presents a flowchart of the procedure of the processing executed at the on-vehicle device 20 and the individual local servers 3a ∼ 3x in an embodiment. It is to be noted that the following explanation is given by assuming that information is exchanged between the on-vehicle device 20 and the local server 3a as the vehicle 10 equipped with the on-vehicle device 20 is currently present in the communication area of the roadside antenna 1a. In addition, the processing at the on-vehicle device 20 is executed by the processing unit 22.

In step S10, the contract information (see FIG. 5) explained earlier is generated as the on-vehicle device 20 is turn on or as the vehicle 10 enters the communication area of the roadside antenna 1a, or the vehicle 10 is judged to enter the communication area with certainty. More specifically, new contract information is generated by updating the advertisement number corresponding to the advertisement most recently displayed at the external display device 30 in the contract information prepared in advance. Once the contract information is generated, the operation proceeds to step S20. In step S20, a signal indicating that the vehicle has entered the communication area of the roadside antenna 1a is first received from the wireless unit 23 and then the contract information generated in step S10 is transmitted to the roadside antenna 1a.

The contract information transmitted from the on-vehicle device 20 is received at the roadside antenna 1a and is then transferred to the local server 3a. In step S100, it is judged as to whether or not the vehicle is driven by a contracted advertisement distributor based upon the contractor code contained in the contract information that has been received. Once it is judged that the vehicle is driven by a contractor, the operation proceeds to step S110, whereas if it is judged that the vehicle is not driven by a contractor, the control in this flowchart ends. In step S110, it is judged as to whether or not the contract term is still in effect based upon the contract term information included in the contract information. The operation proceeds to step S120 if the contract term is determined to be still in effect, whereas if it is judged that the contract term has expired, the control ends.

In step S120, it is judged as to whether or not any advertisement data information from the advertiser contracting the advertisement distributor is stored. The advertiser identification is made based upon the contracting advertiser code included in the contract information. For instance, if the advertiser contracting the advertisement distributor is the company A and the data shown in FIG. 4 are registered by company A at the center server 100, the advertisement data information assigned with number "DA1" is stored in the local server 3a. Accordingly, it is judged that there is advertisement data information from the advertiser contracting the advertisement distributor in this case and the operation proceeds to step S130. If, on the other hand, it is judged that there is no specified advertisement data information, the operation proceeds to step S160.

In step S130, it is judged as to whether or not the advertisement data information stored in the local server 3a to be transmitted to the on-vehicle device 20 is the same as the advertisement data information most recently displayed at the external display device 30. This judgement is made based upon "the advertisement number assigned to the advertisement most recently displayed at the external display device 30", which is included in the contract information. The operation proceeds to step S140 if it is judged that the same advertisement has been displayed previously, whereas the operation proceeds to step S150 if the advertisement data information to be transmitted to the on-vehicle device 20 is not the same. In step S140, a signal indicating that the advertisement most recently displayed at the external display device 30 is to be continuously displayed is transmitted to the on-vehicle device 20 since the advertisement data information stored at the local server 3a is already available in the memory 21 in the on-vehicle device 20. Thus, it is not necessary to perform a redundant operation of retransmitting the advertisement data information already stored in the memory 21 in the on-vehicle device 20.

It is to be noted that while the same advertisement data information may be retransmitted in step S140, it takes a considerable length of communication time to download the advertisement data information into the on-vehicle device 20. While the on-vehicle device 20 is downloading the same advertisement data information, another vehicle may enter the communication area and request advertisement data information. In such a case, the advertisement data information may not be downloaded to the other vehicle promptly. For this reason, the instruction signal indicating that the advertisement most recently displayed is to be continuously displayed alone is transmitted in step S140 in the embodiment.

In step S150, the advertisement data information (DA1) from the contracting advertiser which is stored in the local server 3a is selected before the operation proceeds to step S170. In step S160, to which the operation proceeds after judging in step S120 that no advertisement data information from the advertiser contracting the advertisement distributor is stored, on the other hand, advertisement data information assigned with number 0 is selected and then the operation proceeds to step S170. In step S170, the advertisement data information selected in step S150 or step S160 is transmitted to the on-vehicle device 20. Once the advertisement data information is transmitted, the operation proceeds to step S180.

In step S30, the on-vehicle device 20 displays the advertisement data information transmitted from the local server 3a (step S170) at the external display device 30. If the information indicating that the most recently displayed advertisement is to be continuously displayed has been received (step S140), the most recently displayed advertisement which is stored in the memory 21 is displayed at the external display device 30. At this time, the advertisement may be displayed at the cabin display device 50 as well, and also, an audio output of the advertisement may be provided through the external speaker 40 or the cabin speaker 60 as well. Once the advertisement is displayed, the operation proceeds to step S40. In step S40, an instruction is issued to the wireless unit 23 to transmit a signal indicating that the advertisement display has been completed to the roadside antenna 1a. In response to the instruction from the processing unit 22, the wireless unit 23 transmits the signal indicating the completion of the advertisement display to the roadside antenna 1a.

The advertisement display completion signal transmitted from the on-vehicle device 20 is transferred to the local server 3a via the roadside antenna 1a. In step S180, the local server 3a having received the signal transmits information identifying the advertisement distributor to whom the payment for the advertisement display is due and information indicating when the advertisement was displayed and the like to the advertiser via the center server 100, and also transmits data indicating the exact payment which is due to the on-vehicle device 20. Once the processing in step S180 is executed, the control implemented at the local server 3a ends.

The on-vehicle device 20 having received the payment information transmitted from the local server 3a via the antenna 25 displays the payment due for the advertisement display at the cabin display device 50. This payment may be a monetary fee or any of various types of points as explained earlier. After the payment for the advertisement display is displayed at the cabin display device 50, the control executed at the on-vehicle device 20, too, ends.

In the advertisement distribution method in the first embodiment, in which the advertiser is allowed to determine the specific advertisement data information to be distributed in a given area and the advertisement data information is transmitted to a vehicle driving in the area through a roadside antenna, the advertisement targeted for the area can be distributed in an effective manner. In addition, since the advertiser can update the advertisement to be distributed to the vehicle by writing new data over the data registered in the center server 100, an advertisement for a new product, for instance, can be distributed quickly and easily.
Furthermore, if no advertisement intended for the area is stored in the local server, a common advertisement intended for all the areas is distributed so that advertisements are circulated by efficiently utilizing the time available in the contract term.

Since each roadside server provides an advertisement displaying vehicle with advertisement data information from the advertiser specified by the advertisement displaying vehicle, it is possible to distribute an advertisement in an effective manner by utilizing the advertisement displaying vehicle under an exclusive contract. Namely, unlike an advertisement displaying vehicle in the related art having an advertisement printed on the surface of the vehicle body, the advertisement displaying vehicle in the embodiment displays advertisement data information transmitted from the roadside server through wireless communication via the roadside antenna and is, therefore, capable of quickly and easily providing an advertisement in a more effective manner.

In addition, since the processing with regard to the payment for the advertisement display service is executed after confirming that the advertisement has been displayed at the vehicle, it is ensured that the advertisement is distributed for a payment calculated by confirming that the advertisement has, in fact, been displayed. Furthermore, since the center server 100 and the roadside system including the roadside antennas are co-owned by a plurality of advertisers, the running cost and the system maintenance cost to be incurred by each company can be reduced.

Moreover, since the information indicating that the advertisement display at the advertisement displaying vehicle has been completed is transmitted to the center server 100 via the roadside servers 3a ∼ 3x, the center server 100 is enabled to ascertain the time and location at which the advertisement has been displayed and the identify of the vehicle that has displayed the advertisement and,thus, the center server 100 can keep a more accurate account of the advertisement distribution status of each vehicle.

### Second Embodiment

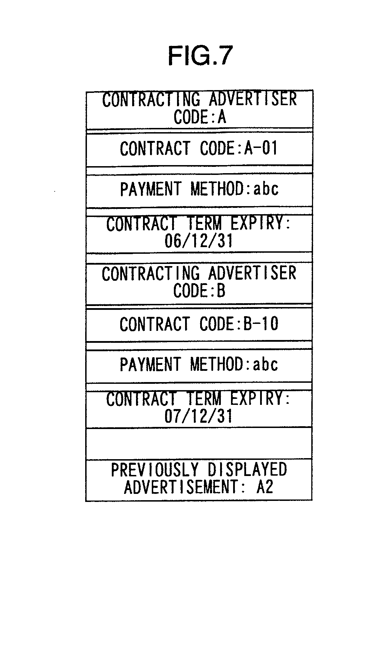

An advertisement distribution method which may be adopted when there are a plurality of advertisers contracting an advertisement distributor is explained in reference to the second embodiment. It is to be noted that the configuration of the road-to-vehicle communication system used in advertisement distribution and the structure of the advertisement displaying vehicle are identical to those in the first embodiment. FIG. 7 presents an example of the contract information transmitted from the on-vehicle device 20 to the roadside antennas 1a ∼ 1x during a road-to-vehicle communication conducted by the on-vehicle device 20 with the roadside antennas 1a ∼ 1x via the antenna 25. As shown in FIG. 7, the advertisement distributor is under contract to a company A and a company B.

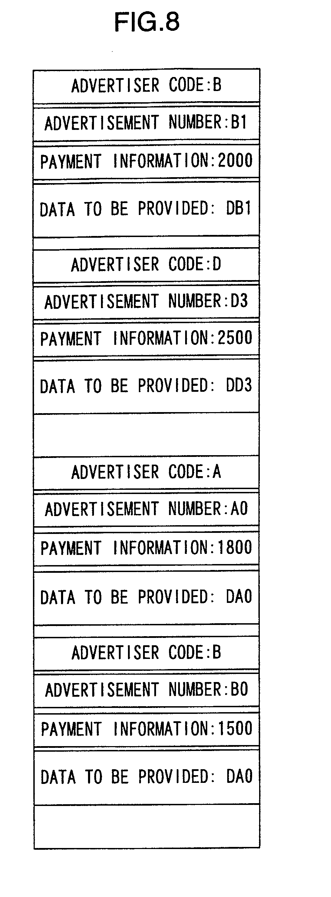

FIG. 8 presents an example of advertisement data stored in a roadside local server having received the contract information shown in FIG. 7. As explained above, the contract information transmitted from the on-vehicle device 20 includes information with regard to company A and company B contracting the advertisement distributor. As shown in FIG. 8, while no advertisement data information provided by company A by specifying a selected area is stored in the local server, advertisement data information DB1 from company B for a specific area is held at the local server.

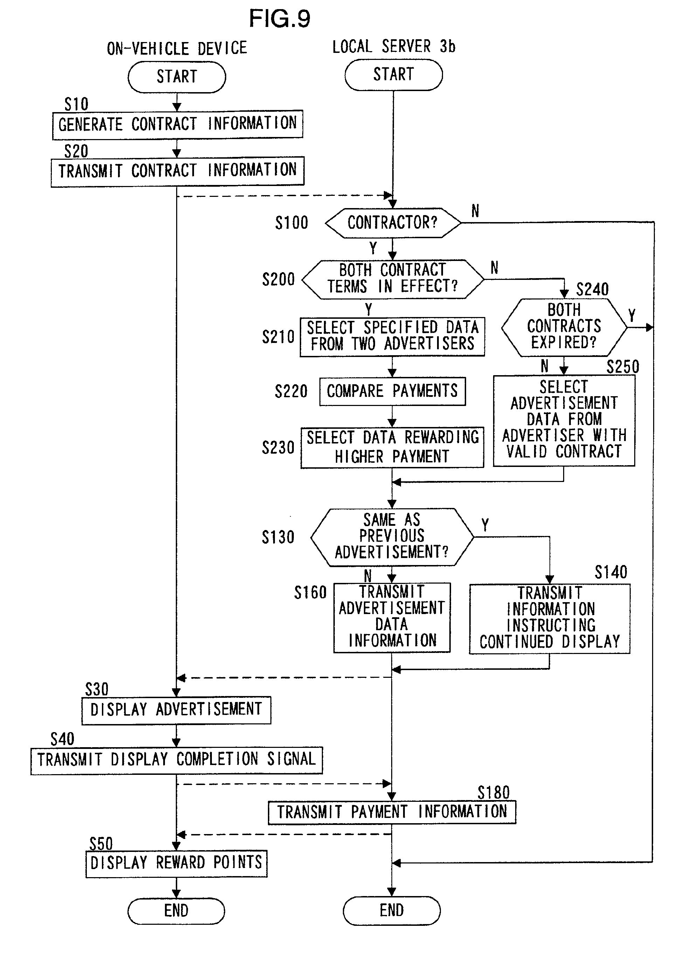

FIG. 9 presents a flowchart of the procedure of the processing executed by adopting the advertisement distribution method when there are two advertisers contracting the advertisement distributor. The same step numbers are assigned to steps in which processing identical to that in the flowchart in FIG. 6 is executed,to preclude the necessity for a detailed explanation thereof. It is to be noted that the following explanation is given by assuming that information is exchanged between the on-vehicle device 20 and the local server 3b as the vehicle 10 equipped with the on-vehicle device 20 is currently present in the communication area corresponding to the roadside antenna 1b. In addition, it is assumed that the contract information shown in FIG. 7 is transmitted from the on-vehicle device 20 and that the advertisement data information shown in FIG. 8 is stored at the local server 3b.

Since the processing executed in steps S10 and S20 by the on-vehicle device 20 and the processing executed in step S100 by the local server 3b are identical to those in the flowchart presented in FIG. 6, their explanation is omitted. Once it is judged in step S100 that the vehicle is driven by a contractor, the operation proceeds to step S200. In step S200, it is judged as to whether or not the contract terms during which the advertisement distributor is contracted to company A and company B are still in effect, i.e., whether or not the advertisement distributor is still under contract to company A and company B. If it is judged that advertisement distributor is still under contract to both company A and company B, the operation proceeds to step S210, but the operation proceeds to step S240, otherwise.

In step S210, advertisement data information specified by company A and company B, the transmission of which has been requested by the on-vehicle device 20, is selected. While there is the advertisement data information DB1 for a specific area from company B, there is no information for a specific area from company A, as shown in FIG. 8. Accordingly, the common advertisement data information DA0 intended for all areas is selected as the advertisement data information from company A. Once the specified advertisement data information is selected, the operation proceeds to step S220. In step S220, the payments (the advertisement display conditions) for distributing the advertisement data information DB1 and the advertisement data information DA0 are compared. The payments are compared based upon the payment information included in the advertisement data information. Once the payments are compared, the operation proceeds to step S230.

In step S230, the advertisement data information judged to reward a higher payment in step S220 is selected. When the payment for displaying the advertisement data information DB1 (the payment information:2000) and the payment for displaying the advertisement data information DA0 (the payment information:1800) are compared, the payment for displaying the advertisement data information DB1 is higher and, accordingly, the advertisement data information DB1 is selected in step S230 before the operation proceeds to step S130.

If, on the other hand, it is judged in step S200 that the contract terms with company A and company B are not both in effect, the operation proceeded to step S240. In step S240, it is judged as to whether or not the contract terms with company A and company B have both expired. If it is judged that both contract terms have expired, the control in this flowchart ends. If, on the other hand, it is judged that the contract term with either company A or company B is still in effect, the operation proceeds to step S250. In step S250, the advertisement data information from the advertiser whose contract is still in effect is selected before the operation proceeds to step S130.

In step S130, it is judged as to whether or not the advertisement data information selected in step S230 or step S250 is the same as the advertisement most recently displayed at the external display device 30. The operation proceeds to step S140 if the advertisement data information is judged to be the same, whereas the operation proceeds to step S160 if it is judged that the advertisement data information is not the same. Since the processing executed in step S140 and step S160 is identical to that in the flowchart presented in FIG. 6, its explanation is omitted.

Since the processing executed in steps S30 ∼ S50 at the on-vehicle device 20 and the processing executed in steps S180 at the local server 3b are identical to those in the flowchart presented in FIG. 6, their explanation is omitted.

By adopting the advertisement distribution method achieved in the second embodiment, in which the advertisement distributor can select or request the advertisement data information which will reward the highest payment by becoming contracted to a plurality of advertisers, the advertisement distributor does not need to be forced to accept a low payment unilaterally set by the advertiser.

### Third Embodiment

In the second embodiment, the advertisement data information that rewards the higher payment is selected by the local server to be transmitted to the on-vehicle device 20 when there are a plurality of advertisers contracting the advertisement distributor. In the third embodiment, on the other hand, payments are compared at the on-vehicle device 20 if there are a plurality of advertisers contracting the advertisement distributor and the on-vehicle device 20 issues a request to the local server to transmit the advertisement data information rewarding the higher payment. It is to be noted that the configuration of the road-to-vehicle communication system used in the advertisement distribution and the structure of the advertisement displaying vehicle are identical to those in the first and second embodiments.

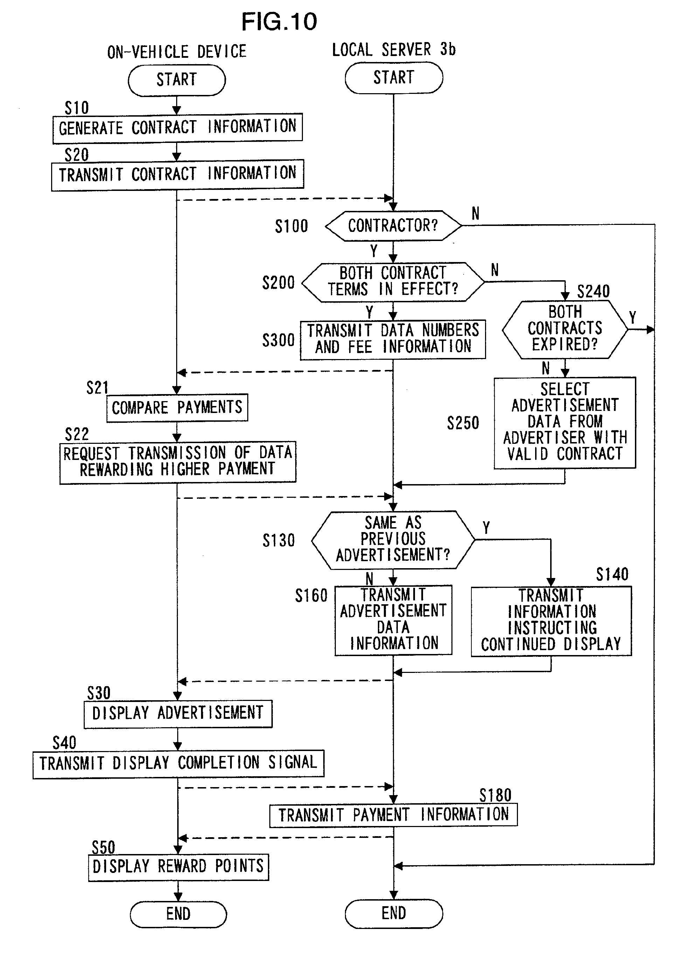

FIG. 10 presents a flowchart of the procedure of the processing executed by adopting the advertisement distribution method when there are two advertisers contracting the advertisement distributor. The same step numbers are assigned to steps in which processing identical to that in the flowcharts presented in FIGS. 6 and 9 is executed to preclude the necessity for a detailed explanation thereof. In addition, as in the flowchart presented in FIG. 9, the information is exchanged between the on-vehicle device 20 and the local server 3b, the contract information shown in FIG. 7 is transmitted from the on-vehicle device 20, and the advertisement data information shown in FIG. 8 is stored at the local server 3b.

Since the processing executed in steps S10 and S20 at the on-vehicle device 20 and the processing executed in steps S100 and S200 executed at the local server 3b are identical to those in the flowchart presented in FIG. 9, their explanation is omitted. Once it is judged that the contract terms with company A and company B contracting the advertisement distributor are both still in effect in step S200, the operation proceeds to step S300. In step S300, the data numbers and the payment information corresponding to the advertisement data information specified by company A and company B are transmitted to the on-vehicle device 20. If there are no area-specific data, the data number indicating common advertisement data information intended for all areas (assigned with the number 0) is transmitted as explained earlier. Accordingly, the data number DA0 and the payment information 1800 corresponding to company A and the data number DB1 and the payment information 2000 corresponding to company B are transmitted to the on-vehicle device 20 in this example.

Upon receiving the data numbers and the payment information transmitted from the local server 3b, the on-vehicle device 20 compares the payments (the advertisement display conditions) in step S21 and, then, the operation proceeds to step S22. In step S22, a transmission request signal requesting the transmission of the advertisement data information rewarding a higher payment is transmitted to the roadside antenna 1b based upon the results of the payment comparison executed in step S21. Since the payment for displaying the advertisement data information DB1 is higher in this example, a transmission request signal requesting the transmission of the advertisement data information DB1 is transmitted to the roadside antenna 1b before the operation proceeds to step S30.

Upon receiving the advertisement data information transmission requested signal, the roadside antenna 1b transfers the corresponding advertisement data information to the local server 3b. In step S130, the local server 3b judges as to whether or not the advertisement data information, the transmission of which has been requested, is the same as the advertisement most recently displayed at the external display device 30. Since the processing executed at the local server 3b and the processing executed at the on-vehicle device 20 subsequently are both identical to those in the flowchart presented in FIG. 9, their explanation is omitted.

By adopting the advertisement distribution method achieved in the third embodiment, in which the advertisement that rewards a higher payment is selected at the on-vehicle device 20 in the advertisement displaying vehicle and the advertisement thus selected is displayed, healthy competition is created among advertisers wishing to secure vehicles that display their advertisements and, as a result, it is ensured that advertising fees are set at an appropriate level. Since the advertisement distributor can earn a stable level of payments in this manner, the number of distributors who use this system is bound to increase, which, in turn, makes it possible to establish an advertisement distribution system achieving an optimal balance between the demand by advertisers and the supply by advertisement distributors.

The above described embodiments are examples, and various modifications can be made without departing from the scope of the invention. For instance, while an explanation is given above in reference to the second and third embodiments on an example in which the advertisement distributor is contracted to two advertisers, the advertisement distributor may have contracts with three or more advertisers. In addition, the vehicle equipped with the external display device may be a large vehicle such as a bus or a truck or it may be a two-wheeler such as a motorcycle, instead of a standard-size vehicle. The present invention is not limited to application achieved in conjunction with a specific communication method adopted in road-to-vehicle communication.

## Claims

1. An advertisement distribution method comprising:
transmitting via roadside antennas (1a ∼ 1x) advertisement data information from a plurality of roadside servers (3a ∼ 3x) having stored therein advertisement data information to advertisement displaying vehicles (10) present within communication ranges of the roadside antennas (1a ∼ 1x).

2. An advertisement distribution method according to claim 1, wherein:
the advertisement displaying vehicles (10) display the advertisement data information having received to be viewed by parties outside the vehicle (10).

3. An advertisement distribution method according to any claim 1 or 2, wherein:
different advertisement data information is stored at the roadside servers (3a ∼ 3x) in correspondence to areas in which the roadside servers (3a ∼ 3x) are installed.

4. An advertisement distribution method according to any one of claims 1 ∼ 3, wherein:
a roadside server (3a ∼ 3x) executes processing related to a payment to be made in exchange for displaying advertisement data information after confirming that an advertisement displaying vehicle (10) has displayed the advertisement data information.

5. An advertisement distribution method according to any one of claims 1 ∼ 4, wherein:
a roadside server (3a ∼ 3x) transmits advertisement data information from a specified advertiser to an advertisement displaying vehicle (10) based upon results of communication conducted between the roadside server (3a ∼ 3x) and the advertisement displaying vehicle (10).

6. An advertisement distribution method according to claim 5, wherein:
if there are a plurality of specified advertisers, the roadside server (3a ∼ 3x) determines the advertisement data information to be transmitted to the advertisement displaying vehicle (10) based upon advertisement display conditions each corresponding to one of the plurality of advertisers.

7. An advertisement distribution method according to claim 6, wherein:
the advertisement display conditions are payments awarded for displaying advertisement data information.

8. An advertisement distribution method according to any one of claims 1 ∼ 7, wherein:
a roadside server (3a ∼ 3x) updates the advertisement data information stored therein based upon an advertisement data information update instruction.

9. An advertisement distribution apparatus comprising:
a plurality of storage means (3a ∼ 3x), each provided in a predetermined area, for storing therein advertisement data information; and
advertisement transmission means (1a ∼ 1x, 2a ∼ 2x), each provided in conjunction with one of the plurality of storage means (3a ∼ 3x), for transmitting the advertisement data information stored in the storage means (3a ∼ 3x) to advertisement displaying vehicles (10).

10. An advertisement displaying vehicle comprising:
a transmission means (23, 25) for transmitting information related to the vehicle (10) to a roadside server (3a ∼ 3x) via a roadside antenna (1a ∼ 1x);
a reception means (25) for receiving advertisement data information transmitted from the roadside server (3a ∼ 3x) via the roadside antenna (1a ∼ 1x); and
a display means (30, 50) for displaying the advertisement data information received at the reception means (25).

11. An advertisement displaying vehicle according to claim 10, wherein:
the information related to the vehicle (10) includes, at least, vehicle identification information that enables the roadside server (3a ∼ 3x) to identify the advertisement displaying vehicle (10).

12. An advertisement displaying vehicle according to claim 10 or 11, wherein:
the transmission means (23, 25) transmits information that enables identification of an advertiser having an advance contract with the vehicle (10) to the roadside server (3a ∼ 3x) via the roadside antenna (1a ∼ 1x); and
the reception means (25) receives the advertisement data information provided by the advertiser with the contract from the roadside server (3a ∼ 3x).

13. An advertisement displaying vehicle according to any one of claims 10 ∼ 12, further comprising:
an advertiser determining means (22) for determining an advertiser whose advertisement data information is to be displayed at the display means (30, 50) if there are a plurality of advertisers with advance contracts, based upon advertisement display conditions offered by the plurality of advertisers; wherein:
the transmission means (23, 25) transmits information enabling identification of the advertiser determined by the advertiser determining means (22) to the roadside server (3a ∼ 3x) via the roadside antenna (1a ∼ 1x).

14. An advertisement displaying vehicle according to any one of claims 10 ∼ 13, wherein:
the display means (30, 50) is provided on theexterior of the advertisement displaying vehicle (10).

15. An advertisement displaying vehicle according to any one of claims 10 ∼ 13, wherein:
the display means (30, 50) is provided on the interior of the advertisement displaying vehicle (10).
